# EUROPEAN PATENT APPLICATION

(11) **EP 0 798 200 A2**
(43) Date of publication of application: **01.10.1997**
(21) Application number: 97104621.4
(22) Date of filing: 18.03.1997
(51) Int. Cl.: B62J 1/18

(54) **Seat cover for motorcycles**

(30) Priority: 27.03.1996 IT BO960173
(71) Applicant: Sodo, Diego, 80127 Napoli (IT)
(72) Inventor: Sodo, Diego, 80127 Napoli (IT)
(74) Representative: Modiano, Guido, Dr.-Ing.

(57) **Abstract**

A seat cover for motorcycles, comprising an elongated box-like element (2) provided with elements for fixing it transversely to a motorcycle and to the rear of a seat (4) of the motorcycle and wherein a spring-loaded winding roller (5) is rotatably mounted, the roller (5) being provided for the end of a strip (6) of waterproof flexible seat covering material which has, at the other end, elements (12a,12b) for coupling it in a covering position.

## Description

The present invention relates to a seat cover for motorcycles.

It is known that motorcycles are very often parked outside in places exposed to the weather, to the fall of dust or of other material, and to the sun.

Depending on the circumstances, the user may need to use, after stopping, a seat which is wet, dusty, dirty, or overheated. In order to obviate this drawback, unsatisfactory methods are currently used, such as tilting the seat forwards (thus exposing the crash-helmet compartment or the underlying pannier to the effects of weather) or covering the saddle with hood-like items which are coupled elastically or with unreliable coverings which are awkward to use and rather unpleasant aesthetically.

Conventional seat covering methods, in addition to often entailing a certain expenditure of time and a rather troublesome manual activity, force the user to handle, remove, or store the coverings, which are usually not clean and dry.

A principal aim of the present invention is to obviate the above-mentioned drawbacks of conventional devices, i.e., to provide a seat cover for motorcycles which allows to protect the seat from the weather, from dirt or from the sun with a structure which can be used very quickly and can be activated and stored with very simple and clean operations.

Within the scope of this aim, an object of the present invention is to achieve the above aim with a structure which is simple, relatively easy to provide in practice, safe in use, effective in operation, and not expensive.

This aim and this object are both achieved by the present seat cover for motorcycles, characterized in that it consists of an elongated box-like element, provided with means for fixing it transversely to a motorcycle and to the rear of a seat of the motorcycle and wherein a spring-loaded winding roller is rotatably mounted, said roller being provided for one end of a strip of waterproof flexible seat covering material which has, at the other end, means for coupling it in a covering position.

Further characteristics and advantages will become apparent from the following detailed description of a preferred but not exclusive embodiment of a seat cover for motorcycles according to the present invention, illustrated only by way of non-limitative example in the accompanying drawings, wherein:

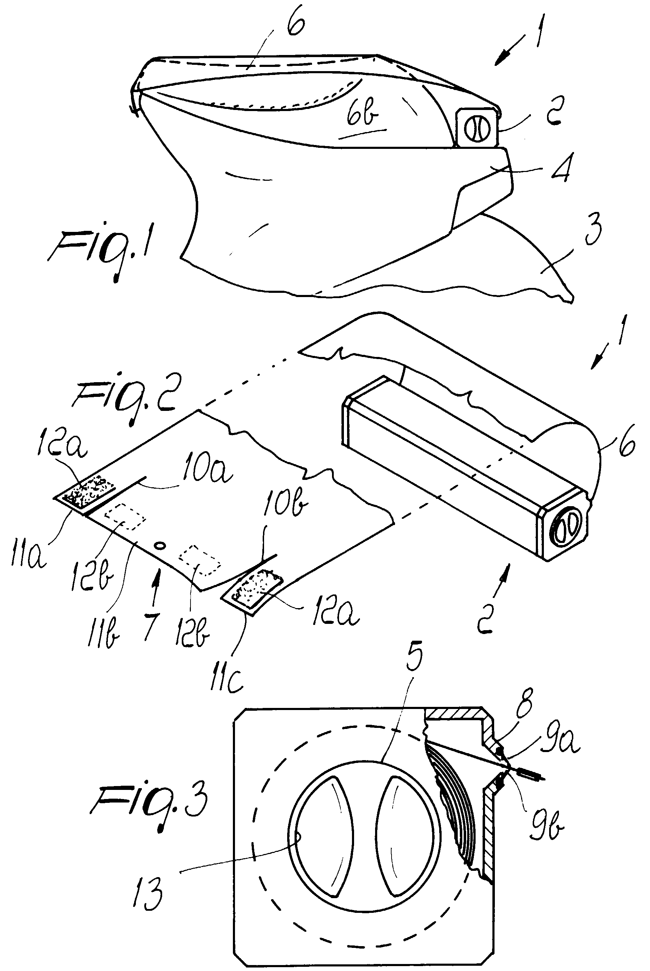

figure 1 is a perspective view of a seat cover for motorcycles according to the present invention, applied to a seat;
figure 2 is a partially cutout perspective view of a seat cover for motorcycles;
figure 3 is a partially sectional enlarged-scale side view of a seat cover;
figure 4 is a schematic top perspective view of a seat cover according to the present invention, in the configuration in which the strip is fully extracted;
figure 5 is a schematic bottom perspective view of a seat cover according to the present invention, in the configuration in which the strip is fully extracted;
figure 6 is a schematic perspective view of the means for fixing the seat cover according to the present invention to a motorcycle;

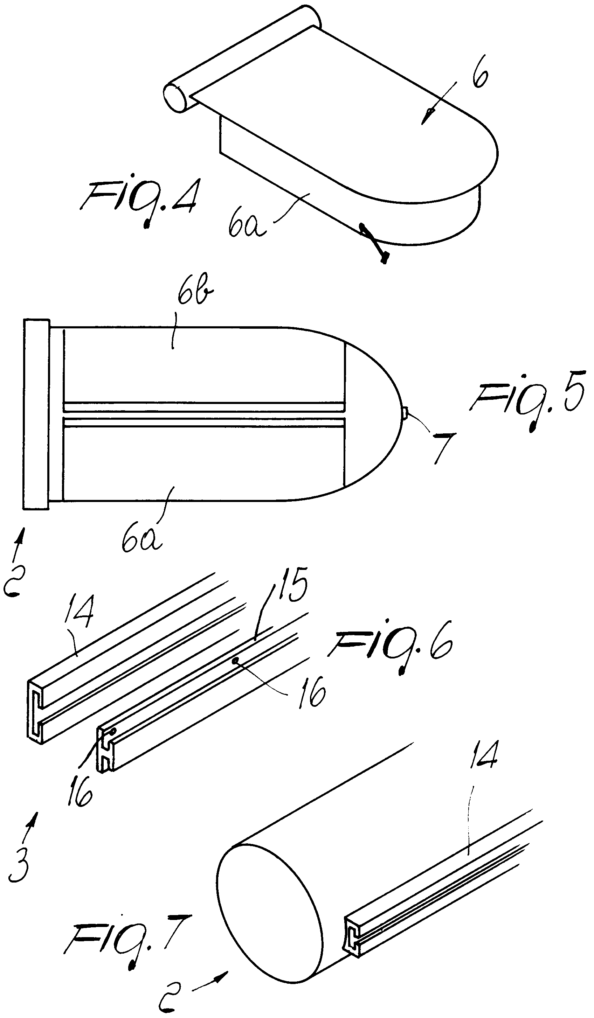

figure 7 is a schematic perspective view of a component of the fixing means, applied to a seat cover according to the present invention.

With particular reference to the above figures, the reference numeral 1 generally designates a seat cover for motorcycles according to the present invention.

The seat cover 1 consists of an elongated box-like element 2, provided with means for fixing it transversely to the motorcycle 3 and to the rear of the seat 4 and wherein a spring-loaded winding roller 5 is rotatably mounted, said roller being provided for the end of a strip 6 made of flexible and waterproof seat covering material which has, at its other end, means 7 for engagement in covering position.

The strip 6 can be of the film-like kind, made of materials such as plastics or waterproofed fabric or the like, preferably with water-repellent features.

The box-like element 2 has, at an elongated slot 8 from which the strip 6 exits, a double shaped profile 9a, 9b which, during windup, is adapted to skim over the surface of the strip to remove any water present thereon.

The strip 6 is wider than the seat, and its free end can have two longitudinal slits 10a, 10b which form three flaps 11a, 11b, and 11c provided with elements 12a, 12b for the mutual engagement of the flaps, which are adapted to allow the hood-like folding and fixing of the front edge of the strip in order to cover the front region of the seat.

Conveniently, the elements for the mutual engagement of the flaps are constituted by portions of material of the kind known by the trade-name Velcro.

In another embodiment of the present invention, shown in figures 4 and 5 before rewinding, the two sides 6a, 6b of the strip 6 are folded so as to adhere against the lower face of the central region of the strip and the flaps 11a, 11b, 11c are joined one another by stitching.

The spring-loaded winding roller 5, of a conventional type, is advantageously provided with an auxiliary knob 13, for example of the kind having two mutually opposite semicircular cavities for manual actuation.

The means for fixing the box-like element 2 to the motorcycle can be constituted by holes of the base of the box-like element for screws or rivets for direct fixing to the vehicle body or by a longitudinal profile 14 having a substantially C-shaped cross-section and coupleable, by snug-fit insertion, to one or more profiles 15 having a substantially T-shaped cross-section and provided with holes 16 for fixing by means of screws or rivets to the body of the motorcycle, optionally with the aid of brackets which are variously shaped according to requirements, the fixing means being provided in an appropriate manner in order to make removal by ill-intentioned persons difficult and troublesome.

The box-like element 2, in provided embodiments, is fixed to the top of a backrest or rack or pannier which can in turn be fixed to the rear of the seat: the backrest or the rack can in turn be provided with two lateral handles or with a rear handle; the box-like element 2 may also be installed below the rear region of the seat.

The box-like element 2 is preferably provided as a separate element, but it might also be included in the structure of a backrest, of a rack, of a pannier, or of a seat.

It is thus evident that the invention achieves the intended aim and object.

The invention thus conceived is susceptible of numerous modifications and variations, all of which are within the scope of the inventive concept.

All the details may also be replaced with other technically equivalent ones.

In practice, the materials employed, as well as the shapes and the dimensions, may be any according to the requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A seat cover for motorcycles, characterized in that it consists of an elongated box-like element, provided with means for fixing it transversely to a motorcycle and to the rear of a seat of the motorcycle and wherein a spring-loaded winding roller is rotatably mounted, said roller being provided for one end of a strip of waterproof flexible seat covering material which has, at the other end, means for coupling it in a covering position.

2. A seat cover according to claim 1, characterized in that said box-like element has, at an elongated slot for the exit of said strip, a shaped profile adapted to skim over the surface of the strip to remove water.

3. A seat cover according to claim 1, characterized in that said fixing means are constituted by holes of the base of the box-like element for screws or rivets for direct fixing to the body of the motorcycle or for shaped brackets which are in turn fixed to the motorcycle body by means of screws or rivets.

4. A seat cover according to claim 1, characterized in that said strip is wider than the seat and in that its free end has longitudinal slits which form flaps and elements for the mutual engagement of the flaps which allow the hood-like folding of the front edge of the strip in order to cover the front region of the seat.

5. A seat cover according to claim 4, characterized in that said elements for mutually engaging the flaps are constituted by portions of material of the kind known by the trade-name Velcro.

6. A seat cover according to claim 1, characterized in that said spring-loaded winding roller has, at one of its ends, an auxiliary knob for manual actuation.

7. A seat cover according to claim 1, characterized in that said strip is wider than said spring-loaded winding roller and has, on its sides, two lateral portions which are adapted to be folded so as to adhere against the lower face of a central region of the strip.

8. A seat cover according to claim 7, characterized in that the free end of said strip is affected by slits, which form flaps shaped to size and stitched together.

9. A seat cover according to claim 1, characterized in that said fixing means are constituted by a longitudinal profile having a C-shaped cross-section and adapted to couple, by snug-fit insertion, to one or more profiles having a substantially T-shaped cross-section and provided with holes for fixing, by means of screws or rivets, to the body of the motorcycle or to anchoring brackets.

10. A seat cover according to claim 1, characterized in that said box-like element is a separate body which can be fixed to the top of a backrest, of a rack, of a pannier or below the rear region of the seat.

11. A seat cover according to claim 1, characterized in that said box-like element is integrated into a backrest, a rack, a pannier, or into a region below a rear part of the seat.
